**Europäisches Patentamt**

**European Patent Office**

**Office européen des brevets**

(19)

(11) Numéro de publication : **0 368 716 B1**

(12) **FASCICULE DE BREVET EUROPEEN**

(45) Date de publication du fascicule du brevet :
07.10.92 Bulletin 92/41

(51) Int. Cl.$^5$ : **G01N 15/08**

(21) Numéro de dépôt : **89402960.2**

(22) Date de dépôt : **26.10.89**

(54) **Procédé et dispositif pour tester la perméabilité des combinaisons étanches telles que notamment utilisées dans le domaine aéronautique.**

(30) Priorité : **04.11.88 FR 8814400**

(43) Date de publication de la demande :
**16.05.90 Bulletin 90/20**

(45) Mention de la délivrance du brevet :
**07.10.92 Bulletin 92/41**

(84) Etats contractants désignés :
**DE GB IT**

(56) Documents cités :
**FR-A- 830 136**
**FR-A- 1 339 712**

(73) Titulaire : **Del-Fiol, Jean**
**34, rue Adolphe Talazac**
**F-31300 Toulouse (FR)**

(72) Inventeur : **Del-Fiol, Jean**
**34, rue Adolphe Talazac**
**F-31300 Toulouse (FR)**

(74) Mandataire : **Chêne, Philippe**
**BUREAU DES BREVETS ET INVENTIONS DE LA DELEGATION GENERALE POUR L'ARMEMENT (DPAG) 26, Boulevard Victor**
**F-75996 Paris Armées (FR)**

## Description

L'invention concerne un procédé et un dispositif pour tester des combinaisons étanches telles que notamment utilisées dans le domaine aéronautique.

Actuellement, les tests d'imperméabilité des combinaisons étanches telles que portées par les pilotes lors d'une mission avec survol maritime sont effectués généralement de façon très empirique, chaque fois qu'une combinaison a été l'objet de réparation au niveau des joints de poignets ou de cou, ou des chaussons. Le procédé consiste en effet à faire revêtir à un opérateur une combinaison par-dessus un vêtement chaud, puis à laisser ce dernier dans l'eau en position semi-allongée et statique pendant environ trente minutes. Lorsque l'essai est terminé, la combinaison est examinée et l'on détermine si elle a absorbé une masse d'eau supérieure ou inférieure à 50 g afin, soit de décider de sa réforme, soit de la juger bonne pour le service.

Comme on le conçoit, ce procédé présente plusieurs inconvénients. En premier lieu, les conditions de température d'eau requises pour les tests (inférieure ou égale à 18° C) sont rarement respectées, ce qui rend préjudiciable la conformité de l'essai, car la perméabilité du tissu décroît lorsque la température augmente. De plus, le procédé présente un caractère traumatisant pour les opérateurs qui se voient obligés de rester plusieurs heures immobiles dans une eau froide lors du test d'une série de combinaisons. Enfin, la fiabilité même de ce procédé est douteuse, car le diagnostic final quant à la reconnaissance de la perméabilité de la combinaison est peu aisé.

Il existe également, pour réaliser ce type de tests d'imperméabilité, un autre procédé palliant les inconvénients de la technique ci-dessus décrite, relatifs à l'obligation de faire revêtir la combinaison à un opérateur humain. Cette technique consiste à utiliser une table en acier inoxydable présentant une section transversale en forme de V et inclinée longitudinalement de façon à collecter son contenu dans un flacon gradué au travers d'un orifice de vidange ménagé vers l'extrémité basse de cette table. La combinaison retournée à l'envers est disposée sur cette table, les poignets et le cou étant maintenus au-dessus de ce dernier, puis elle est remplie d'eau. Après un laps de temps prédéterminé, la combinaison est retirée du bassin et vidée, puis examinée de façon à relever les traces éventuelles de fuites d'eau. Parallèlement, on relève le niveau d'eau recueilli dans le flacon gradué, en vue d'évaluer la masse d'eau ayant traversé la combinaison. Bien qu'avantageuse par rapport au procédé précédent du point de vue humain, cette technique présente toutefois trois inconvénients majeurs. En premier lieu, ce test ne permet pas de vérifier l'imperméabilité des joints de cou et poignets qui ne sont pas plongés dans l'eau. De plus, le diagnostic final reste très aléatoire, du fait de l'eau résiduaire restant sur la table et non prise en compte, car le seuil au-delà duquel une combinaison est réformée correspond à une valeur en masse d'eau faible (50 grammes). Enfin, le fait de remplir la combinaison d'eau engendre des contraintes difficilement appréciables sur le tissu qui peuvent entraîner des fuites, notamment au niveau des coutures, car ce tissu est testé dans des conditions différentes des conditions naturelles d'emploi.

La présente invention se propose de pallier les inconvénients des techniques connues et a pour objectif principal de fournir un procédé et un dispositif ne nécessitant pas une présence humaine dans la combinaison et offrant une bonne fiabilité quant au diagnostic final porté sur l'imperméabilité de cette combinaison.

Un autre objectif est de fournir un dispositif permettant d'éviter les frais de réparation d'une combinaison dont le tissu est perméable.

A cet effet, l'invention concerne un procédé pour tester la perméabilité de combinaisons étanches telles que notamment utilisées dans le domaine aéronautique, caractérisé en ce qu'il consiste :
- à habiller d'une desdites combinaisons étanches, un mannequin comportant au moins un buste et quatre membres,
- à introduire le mannequin dans un caisson étanche se présentant sous la forme d'un corps comportant un buste et des membres inclinés d'un angle prédéterminé par rapport audit buste,
- à remplir le caisson étanche de liquide jusqu'à un niveau prédéterminé pour lequel le mannequin est au moins partiellement immergé, et à relever ce niveau, dit de référence, après stabilisation de ce dernier,
- à laisser le mannequin dans le caisson pendant un laps de temps prédéterminé et à relever, après expiration de ce laps de temps, le nouveau niveau de liquide dans le caisson, en vue de déterminer, à partir de la différence de niveau, la masse de liquide ayant pénétré dans la combinaison,
- à vider le caisson et à retirer le mannequin de ce dernier.

Ce procédé permet de déterminer directement la masse d'eau ayant pénétré dans la combinaison et donc de juger immédiatement de la perméabilité ou non de la combinaison.

En outre, selon un mode de mise en oeuvre préférentiel, l'on remplit le caisson étanche jusqu'à un niveau adapté pour que seules les extrémités des membres du mannequin émergent au-dessus du liquide, de façon à déterminer la masse de liquide absorbée par le tissu de la combinaison.

Ce test préliminaire présente le grand avantage d'autoriser un contrôle préalable de la perméabilité du tissu, avant de commencer la réparation des combinaisons et constitue donc un gain de temps et un gain financier notables. Seules les combinaisons ayant satisfait à ce test sont en effet dirigées vers l'atelier de réparation, les autres étant réformées.

Il est à noter, par ailleurs, que ce test préliminaire peut être effectué en temps masqué, car l'opérateur peut continuer ses activités de réparation pendant la durée du test.

Selon une autre caractéristique de l'invention, l'on utilise un caisson étanche monté pivotant sur une ossature, entre une position, dite couchée, où il est disposé avec le buste sensiblement horizontal et les membres orientés vers le haut, et une position, dite debout, dans laquelle le buste est sensiblement vertical et les membres orientés vers le bas.

Ce pivotement du caisson permet d'effectuer des essais de perméabilité en maintenant le haut du buste du mannequin hors de l'eau et par conséquent offre la possibilité d'effectuer un test préliminaire pour des combinaisons dont le joint de cou, notablement détérioré, fausserait les résultats en raison des fuites importantes présentées à son niveau.

Enfin, une fois les réparations effectuées, on effectue préférentiellement un test d'immersion totale pour lequel l'on remplit le caisson étanche jusqu'à un niveau adapté pour que la totalité du mannequin soit immergée, de façon à s'assurer de l'imperméabilité de l'ensemble de la combinaison.

Ce test d'immersion totale permet de s'assurer de la qualité des réparations effectuées avant que la combinaison ne soit remise en service. En outre, on constate que la combinaison a en fait subi deux tests consécutifs, avant et après réparation, d'où une sécurité de vol notablement accrue.

Par ailleurs, le mannequin utilisé est préférentiellement réalisé en un matériau rigide et est articulé au niveau des hanches, des épaules, des coudes, des genoux et des chevilles de façon à faciliter l'habillage de ce dernier et son introduction dans le caisson.

En outre, le matériau rigide utilisé pour la réalisation de ce mannequin est avantageusement percé d'une pluralité de passages d'air répartis sur sa surface de façon à permettre l'évacuation de l'air emprisonné entre ledit mannequin et la combinaison, lors du remplissage du caisson. De plus, ce mannequin est doté d'un conduit d'évacuation d'air disposé en partie haute du buste et adapté pour déboucher à l'air libre au travers d'un orifice ménagé dans le caisson lorsque ledit mannequin est installé à l'intérieur dudit caisson. Ainsi, l'air emprisonné entre la combinaison et le mannequin est évacué à l'extérieur du caisson jusqu'à ce que la pression d'air à l'intérieur de ce mannequin corresponde à la pression atmosphérique ambiante.

En dernier lieu, ce mannequin est préférentiellement revêtu au préalable d'un vêtement l'habillant sur sa plus grande surface, de façon à pouvoir observer, une fois le test effectué, la présence éventuelle de zones humides localisées, notamment au niveau des coutures, des fermetures à glissière... et ainsi éviter de réformer des combinaisons dont le tissu est imperméable.

L'invention s'étend à un dispositif pour la mise en oeuvre de ce procédé, caractérisé en ce qu'il comprend :

– une ossature portant un caisson étanche se présentant sous la forme d'un corps comportant un buste et des membres inclinés d'un angle prédéterminé par rapport audit buste, ledit caisson étant doté d'un couvercle étanche amovible pour l'introduction d'un mannequin revêtu d'une combinaison,

– des moyens de remplissage adaptés pour remplir de liquide le caisson jusqu'à un niveau prédéterminé, dit de référence,

– des moyens de vidange dudit caisson,

– des moyens de mesure de l'évolution du niveau de liquide à l'intérieur du caisson, après remplissage de ce dernier.

D'autres caractéristiques, buts et avantages de l'invention ressortiront de la description détaillée qui suit en référence aux dessins annexés qui en représentent à titre d'exemple un mode de réalisation préférentiel. Sur ces dessins qui font partie intégrante de la présente description :

– la figure 1 est une vue en perspective d'un dispositif conforme à l'invention, avec une partie de l'ossature arrachée,

– la figure 2 en est une vue de face,

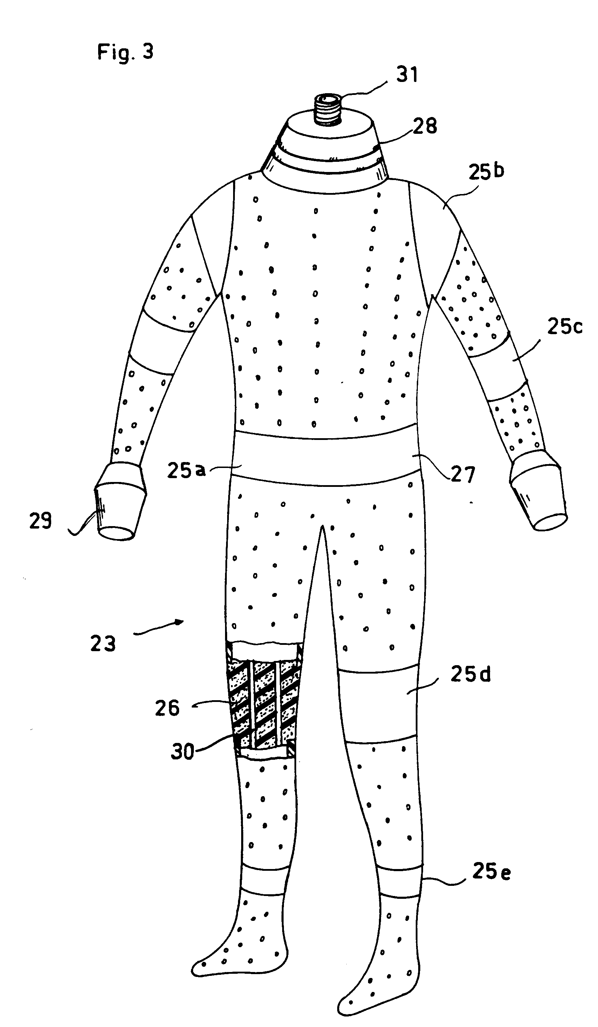

– la figure 3 est une vue en perspective d'un mannequin utilisé avec un dispositif conforme à l'invention, avec une partie arrachée,

– les figures 4a, 4b, 4c sont des vues de face de ce dispositif dans chacune des configurations de tests effectués sur les combinaisons,

– la figure 5 est un exemple de courbes d'étalonnages de la perméabilité d'une combinaison.

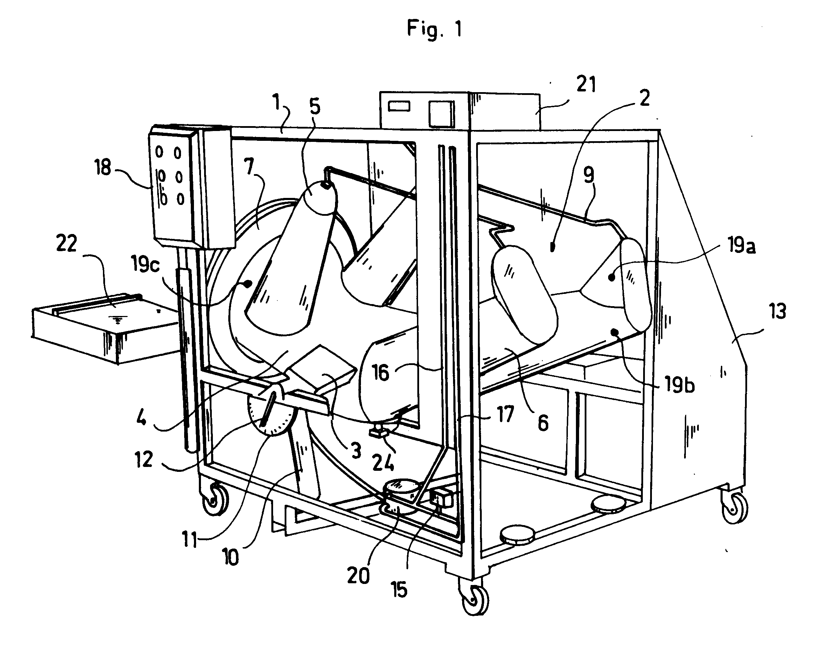

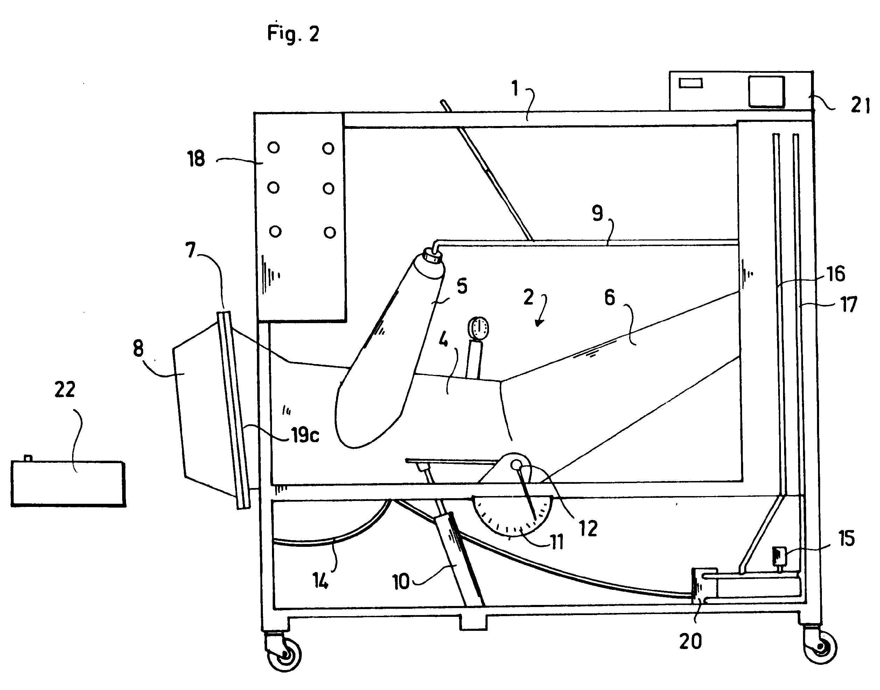

Le dispositif représenté aux figures 1 et 2 comporte comporte une ossature tubulaire 1 sur roues portant un caisson étanche 2 articulé sur cette ossature par l'intermédiaire d'un axe d'articulation 3, de façon à pouvoir pivoter par rapport à cette dernière.

Ce caisson étanche 2 présente la forme d'un corps humain et comporte un buste 4, deux bras 5 inclinés selon un angle sensiblement compris entre 60 et 80 degrés par rapport au buste et deux jambes 6 inclinées selon un angle sensiblement compris entre 30 et 50 degrés par rapport à ce buste. La partie supérieure du buste 4 est dotée d'une couronne 7 sur laquelle vient se fixer un couvercle étanche 8. En outre, les extrémités des jambes 6 et des bras 5 débouchent à l'air libre par l'intermédiaire de tuyaux 9, de façon à éviter une mise en pression du caisson 2 lors de son remplissage.

Le pivotement du caisson 2 est assuré par deux vérins 10 articulés respectivement sur l'ossature 1 et sur ce caisson 2 et agencés de façon à le faire pivoter entre deux positions extrêmes : une position couchée où le buste 4 est sensiblement horizontal et les bras 5 et jambes 6 orientés vers le haut, et une position debout où le buste 4 est sensiblement vertical et les bras 5 et jambes 6 orientés vers le bas. L'inclinaison exacte du caisson est indiquée au moyen d'un rapporteur 11 disposé sur l'ossature 1 et en regard duquel se déplace une aiguille 12 portée par l'axe d'articulation 3.

Le dispositif comporte par ailleurs une réserve d'eau 13, disposée sur l'arrière de l'ossature 1 et reliée au caisson au moyen de tuyaux souples débouchant en partie basse du buste 4. Les moyens de remplissage et de vidange sont en outre constitués, de façon connue en soi, de pompes et électrovannes pneumatiques (non représentées).

Les tuyaux souples 14 de remplissage et de vidange du caisson alimentent également, par l'intermédiaire d'une électrovanne temporisée 15, deux tubes capillaires parallèles et verticaux 16, 17 disposés sur la face avant du dispositif.

Ces différents éléments de remplissage et de vidange sont actionnés à partie d'un boîtier de commande 18 disposé sur la face frontale du dispositif et agencé pour engendrer sur commande :

– le remplissage simultané du caisson 2 et des tubes 16, 17 jusqu'à un niveau prédéterminé de référence,

– l'excitation automatique, après remplissage, de l'électrovanne temporisée 15, destinée à obturer un des tubes 17 à l'intérieur duquel le niveau restera donc constant et égal au niveau de référence et à laisser libre l'écoulement du deuxième tube 16 dont le niveau descendra de façon identique à la baisse de niveau du caisson 2,

– la vidange simultanée du caisson 2 et des tubes capillaires 16, 17 après réalisation du test d'immersion.

En outre, afin de réaliser les tests d'immersion de différentes combinaisons avec un niveau de référence strictement constant à l'intérieur du caisson 2, ce dernier est doté de détecteurs de niveau constitués de contacts électriques 19a, 19b, 19c disposés de façon superposée vers l'extrémité d'une jambe 6, pour deux d'entre-eux, et vers la partie supérieure du buste 4 pour le troisième. Ces contacts 19 sont adaptés pour commander l'arrêt du remplissage du caisson 2 pour des niveaux de référence prédéterminés, fonction du test d'immersion choisi, tel qu'on le verra ci-après. Leur présence permet donc d'obtenir une information de départ de lecture identique pour chaque essai et, par conséquent, de s'affranchir de tous risques d'erreurs d'origine humaine.

En dernier lieu, le dispositif comporte des moyens de mesure et d'enregistrement de la pression différentielle entre les deux tubes 16 et 17. Ces moyens de mesure et d'enregistrement comprennent un capteur différentiel 20 étalonné pour mesurer des différences de pression dans une plage de 0 à 10 millibars, un lecteur numérique 21 adapté pour afficher en temps réel la différence de niveau de liquide dans les deux tubes capillaires 16 et 17, et une table traçante 22 connectée à ce lecteur 21, adaptée pour tracer en continu une courbe représentative de la différence de pression et donc, de la masse d'eau ayant pénétré dans la combinaison insérée dans le caisson 2.

De plus, un capteur de pression relative 24 est placé au dos du caisson 2 et relié à la table traçante 22, en vue d'afficher la pression supportée par la combinaison en son point le plus bas, en regard du niveau d'eau choisi pour assurer le test.

Afin de réaliser les tests au moyen de ce dispositif, la combinaison est au préalable enfilée sur un mannequin 23 revêtu d'un vêtement chaud et réalisé en un matériau rigide. Ce mannequin 23 présente des articulations 25a, 25b, 25c, 25d, 25e au niveau des hanches, des épaules, des coudes, des genoux et des chevilles, afin de permettre son introduction dans le caisson 2. Ces articulations sont obtenues en découpant le mannequin 23 aux endroits précités et en introduisant en force dans les parties ainsi séparées des blocs 26 de mousse compacte, assurant une liaison souple de ces parties. La finition est enfin assurée au moyen d'un bandage 27 masquant la découpe effectuée.

Par ailleurs, le mannequin 23 comporte des cônes 28, 29 au niveau de la partie supérieure du buste et de l'extrémité des bras, adaptés pour obturer de façon étanche les joints de poignets et de cou de la combinaison. Le cône 28 est en outre doté de deux gorges annulaires permettant de bien plaquer le joint de cou sur ce cône, au moyen d'un élastique.

Le matériau rigide est enfin percé d'une pluralité de passages d'air répartis sur sa plus grande surface, de façon à permettre l'évacuation de l'air enfermé entre le mannequin 23 et la combinaison lors du remplissage du caisson 2.

Des tuyaux de liaison 30 traversant les blocs de mousse 26 assurent, en outre, la libre circulation de l'air entre les différentes parties internes du mannequin, de façon à permettre d'évacuer cet air au travers d'un conduit d'évacuation 31 traversant le cône 28. Ce conduit 31 est destiné à déboucher à l'air libre au travers d'un orifice ménagé dans le couvercle 8 du caisson 2 et comporte une extrémité filetée extérieurement, permettant de le maintenir de façon étanche sur ce couvercle au moyen d'un écrou 32.

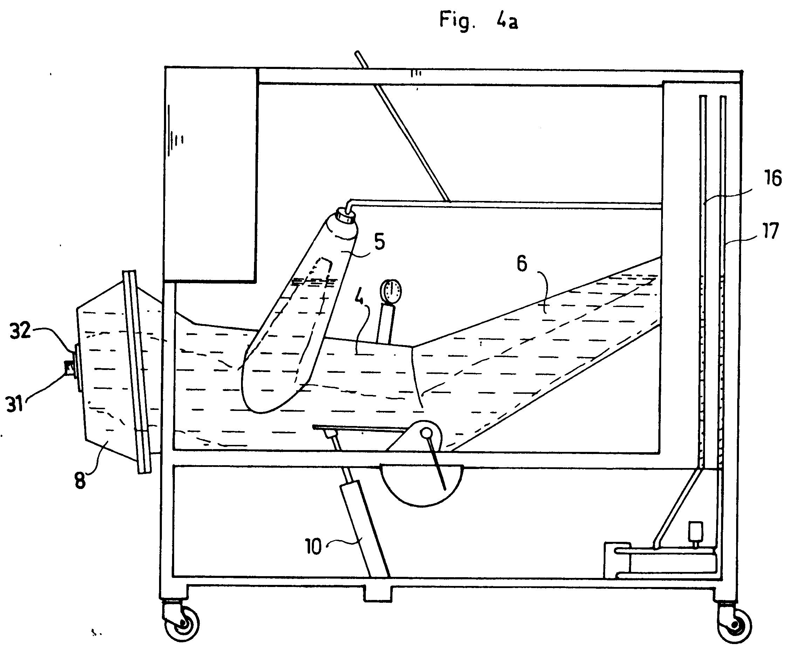

Le dispositif de test de perméabilité et le mannequin 23 destiné à être revêtu de la combinaison à tester ayant été décrits, les différentes possibilités de tests pouvant être effectuées vont être décrites ci-dessous en référence aux figures 4a à 4c. En fait et tels qu'illustrés à ces figures, trois types de test sont généralement envisagés.

Tout d'abord, lors de la réception d'une combinaison en vue de sa réparation, celle-ci va subir un test d'immersion partielle pour lequel le caisson 2 est disposé selon sa position couchée et le niveau adapté pour que les joints de poignets et les chaussons émergent au-dessus de l'eau (figure 4a). Dans ce cas, l'opérateur opte donc pour l'activation du contact électrique 19b.

Ce test préliminaire a pour but de vérifier le taux de perméabilité du tissu de la combinaison en vue de réformer directement les combinaisons perméables avant d'engager tous frais de réparation inutiles.

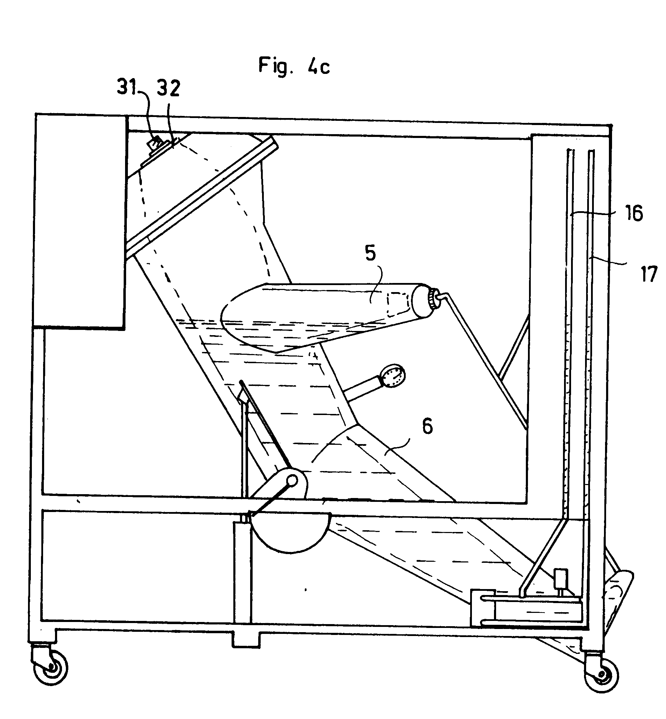

Dans le cas où le joint de col est visiblement détérioré, il peut être substitué à ce test préliminaire un deuxième test dans lequel le caisson 2 est disposé selon sa position debout et le niveau adapté pour que ce joint de col et les joints de poignet émergent au-dessus de l'eau (figure 4c). Le contact électrique sélectionné est alors le contact 19c.

Il est en outre à noter que le caisson 2 peut également être incliné selon des positions intermédiaires permettant d'effectuer des tests probants malgré d'éventuelles fuites localisées importantes résultant d'accrocs ou autres.

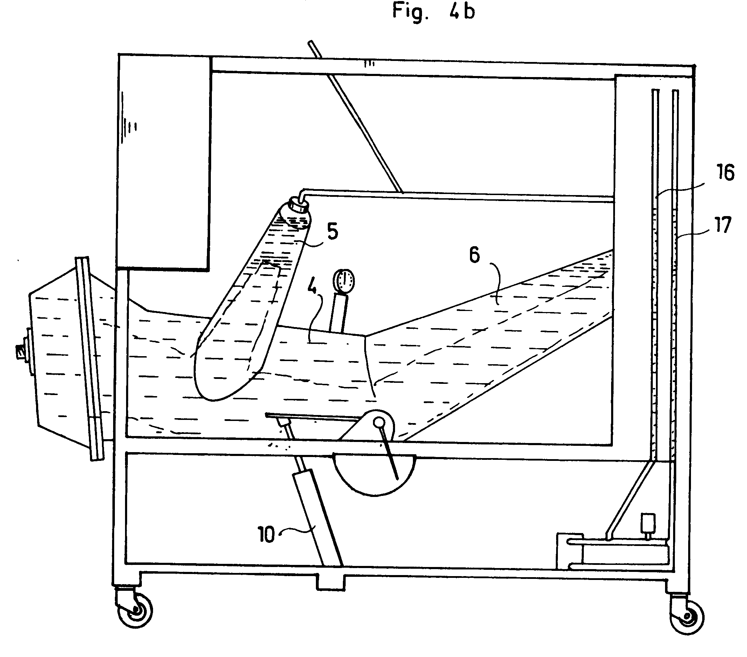

Enfin, une fois réparée, la combinaison subit un test d'immersion totale pour lequel le caisson 2 est à nouveau dans sa position couchée. Par contre, le niveau d'eau est alors adapté pour que la totalité de la combinaison soit immergée, ce qui correspond à l'activation du contact 19a (figure 4b). Ce dernier test a pour but de vérifier la qualité des réparations effectuées avant de remettre en service la combinaison.

Une telle procédure consistant à tester au moins deux fois chaque combinaison garantit une sécurité de vol notablement accrue, tout en constituant une charge de travail supplémentaire réduite, car tous les tests peuvent être effectués en temps masqués pendant que l'opérateur continue ses activités de réparation. En outre, le fait d'effectuer un test préliminaire engendre un gain de temps et un gain financier notables, seules les combinaisons dont le tissu n'est pas perméable étant réparées.

Pour chacun de ces tests, le mode opératoire est identique et consiste à :
– revêtir le mannequin 23 doté de son vêtement au moyen d'une combinaison,
– introduire ce mannequin 23 dans le caisson 2, puis à obturer ce dernier au moyen du couvercle 8, et à bloquer le conduit d'évacuation 31 sur ce couvercle 8 au moyen de l'écrou 32,
– actionner le remplissage du caisson 2 jusqu'au niveau de référence déterminé pour lequel le contact 19 sélectionné stoppe le remplissage et entraîne l'excitation de l'électrovanne temporisée 15,
– laisser le mannequin immergé pendant un laps de temps prédéterminé, de l'ordre de 30 minutes, au cours duquel la courbe représentative de la différence de pression entre les tubes 16 et 17 est retranscrite en continu sur la table traçante 22,
– vidanger le caisson 2 et retirer le mannequin 23.

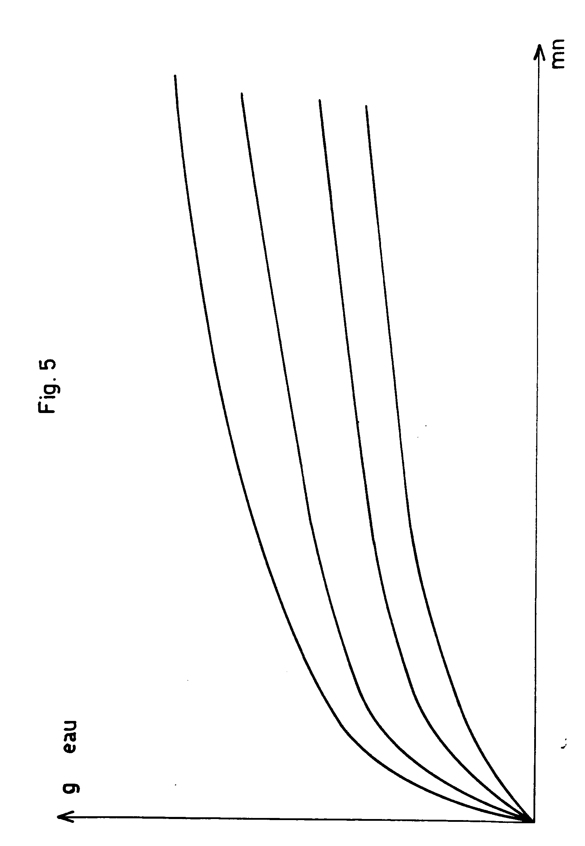

L'interprétation de la courbe tracée par la table traçante 22 est ensuite effectuée en superposant cette courbe avec un diagramme, tel que représenté à la figure 5, comportant une série de courbes d'étalonnage établies pour chaque type de combinaison connu et à partir desquelles on peut définir la masse d'eau ayant pénétré dans la combinaison.

Il est à noter par ailleurs que ce procédé permet de détecter, non seulement la quantité d'eau ayant traversé la combinaison, mais également celle étant restée entre les deux tissus composant cette combinaison. Un tel procédé est donc particulièrement avantageux pour déterminer la qualité d'une combinaison neuve.

**Revendications**

1/ - Procédé pour tester la perméabilité de combinaisons étanches, telles qu'utilisées notamment dans le domaine aéronautique, caractérisé en ce qu'il consiste :
– à habiller d'une desdites combinaisons étanches un mannequin (23) comportant au moins un buste et quatre membres,
– à introduire le mannequin (23) dans un caisson étanche (2) se présentant sous la forme d'un corps comportant un buste (4) et des membres (5, 6) inclinés d'un angle prédéterminé par rapport audit buste (4),
– à remplir le caisson étanche (2) de liquide jusqu'à un niveau prédéterminé pour lequel le mannequin (23) est au moins partiellement immergé, et à relever ce niveau, dit de référence, après stabilisation de ce dernier,
– à laisser le mannequin (23) dans le caisson (2) pendant un laps de temps prédéterminé et à relever, après expiration de ce laps de temps, le nouveau niveau de liquide dans le caisson, en vue de déterminer, à partir de la différence de niveau, la masse de liquide ayant pénétré dans la combinaison,
– à vider le caisson (2) et retirer le mannequin (23) de ce dernier.

2/ - Procédé selon la revendication 1, caractérisé en ce que l'on remplit le caisson étanche (2) jusqu'à un niveau adapté pour que seules les extrémités des membres du mannequin (23) émergent au-dessus du liquide, de façon à déterminer la masse de liquide absorbée par le tissu de la combinaison.

3/ - Procédé selon la revendication 1, caractérisé en ce que l'on remplit le caisson étanche (2) jusqu'à un niveau adapté pour que la totalité du mannequin (23) soit immergé de façon à s'assurer de l'imperméabilité de l'ensemble de la combinaison.

4/ - Procédé selon l'une des revendications 2 ou 3, caractérisé en ce que l'on utilise un caisson étanche (2) monté pivotant sur une ossature (1), entre une position, dite couchée, où il est disposé avec le buste (4) sensiblement horizontal et les membres (5, 6) orientés vers le haut, et une position, dite debout, dans laquelle le buste (4) est sensiblement vertical et les membres (5, 6) orientés vers le bas.

5/ - Procédé selon l'une des revendications précédentes, caractérisé en ce que l'on revêt au préalable le mannequin (23) d'un vêtement l'habillant sur sa plus grande surface.

6/ - Procédé selon l'une des revendications précédentes, caractérisé en ce que l'on utilise un mannequin (23) en un matériau rigide, articulé au niveau des épaules, des coudes, des hanches, des genoux et des chevilles.

7/ - Procédé selon la revendication 6, caractérisé en ce que l'on utilise un mannequin (23) creux :
– réalisé en un matériau rigide percé d'une pluralité de passages d'air répartis sur sa surface, de façon à permettre l'évacuation de l'air emprisonné entre ledit mannequin (23) et la combinaison,
– doté d'un conduit d'évacuation d'air disposé en partie haute du buste et adapté pour déboucher à l'air libre au travers d'un orifice ménagé dans le caisson (2) lorsque ledit mannequin (23) est installé à l'intérieur dudit caisson (2).

8/ - Procédé selon l'une des revendications précédentes, caractérisé en ce que l'on effectue les opérations suivantes pour déterminer la masse de liquide ayant pénétré dans la combinaison :
– on utilise deux tubes capillaires (16, 17) communiquant avec le caisson (2) de façon que le niveau de liquide dans lesdits tubes (16, 17) s'élève au même niveau que celui dudit caisson (2) lors du remplissage de ce dernier,
– on maintient, après remplissage, un des tubes (17) au niveau de remplissage de référence du caisson (2), l'autre tube (16) étant maintenu en communication avec ce caisson (2) de façon que la baisse de niveau dans lesdits tube (16) et caisson (2) soit similaire,
– on enregistre en continu l'évolution de la pression différentielle entre les deux tubes (16, 17) et on compare les résultats obtenus avec des données d'étalonnage établies pour le type de combinaison testée.

9/ - Dispositif pour la mise en oeuvre d'un procédé conforme à l'une des revendications précédentes, caractérisé en ce qu'il comprend :
– une ossature (1) portant un caisson étanche (2) se présentant sous la forme d'un corps comportant un buste (4) et des membres (5, 6) inclinés d'un angle prédéterminé par rapport audit buste (4), ledit caisson (2) étant doté d'un couvercle étanche amovible (8) pour l'introduction d'un mannequin (23) revêtu d'une combinaison,
– des moyens de remplissage (13, 14) adaptés pour remplir de liquide le caisson (2) jusqu'à un niveau prédéterminé, dit de référence,
– des moyens de vidange dudit caisson (2),
– des moyens de mesure (15, 16, 17, 20, 21, 22) de l'évolution du niveau de liquide à l'intérieur du caisson (2), après remplissage de ce dernier.

10/ - Dispositif selon la revendication 9, caractérisé en ce qu'il comprend des moyens de pivotement (10) du caisson (2) par rapport à l'ossature (1) adaptés pour faire pivoter ledit caisson (2) entre deux positions extrêmes :
– une position, dite couchée, où le buste (4) est sensiblement horizontal et les membres (5, 6) orientés vers le haut,
– une position, dite debout, où le buste (4) est sensiblement vertical et les membres (5, 6) orientés vers le bas.

11/ - Dispositif selon l'une des revendications 9 ou 10, caractérisé en ce que le caisson (2) comprend des bras (5) inclinés d'un angle sensiblement compris entre 60 et 80 degrés par rapport au buste (4), et des jambes (6) inclinées selon un angle sensiblement compris entre 30 et 50 degrés par rapport audit buste (4).

12/ - Dispositif selon l'une des revendications 9 à 11, caractérisé en ce qu'il comprend des moyens de détection (19) du niveau de liquide à l'intérieur du caisson, adaptés pour couper les moyens de remplissage en liquide dudit caisson (2), lors de l'obtention du niveau de référence.

13/ - Dispositif selon l'une des revendications 9 à 12, caractérisé en ce que les moyens de mesure du niveau de liquide dans le caisson (2) comprennent :
– deux tubes capillaires (16, 17) communiquant avec le caisson (2) et agencés de façon que le niveau de liquide dans lesdits tubes et caisson (2) soit similaire lors du remplissage de ce dernier,
– des moyens d'obturation (15) d'un des tubes (17) adaptés pour maintenir dans ledit tube (17) un niveau de liquide correspondant au niveau de référence,
– des moyens de mesure et d'enregistrement en continu (20, 21, 22) de la pression différentielle entre les deux tubes (16, 17).

**Claims**

1 - Procedure for testing the permeability of waterproof suits, as used, for example, in the field of aviation, and characterized in that it comprises:
– dressing a dummy (23) comprising at least a chest and four limbs in one of the said waterproof suits,
– inserting the dummy (23) in a watertight chamber (2) that is in the form of a body comprising a chest (4) and limbs (5, 6) tilted at a predetermined angle in relation to the said chest (4).

– filling the watertight chamber (2) with liquid up to a predetermined level so that the dummy (23) is at least partially submerged, and recording this level, known as the reference level, after it has stabilised,

– leaving the dummy (23) in the chamber (2) for a predetermined amount of time and recording, after this period of time has elapsed, the new level of liquid in the chamber, with a view to determining, using the difference in level, the mass of liquid that has penetrated the suit,

– draining the chamber (2) and removing the mannequin (23) from this.

2 - Procedure according to claim 1, characterized in that the watertight chamber (2) is filled up to a suitable level whereby only the ends of the limbs of the dummy (23) protrude above the liquid, so that the mass of liquid absorbed by the fabric from which the suit is made can be determined.

3 - Procedure according to claim 1, characterized in that the watertight chamber (2) is filled up to a suitable level whereby the entire dummy (23) is submerged in order to check the impermeability of the suit as a whole.

4 - Procedure according to either of claims 2 or 3, characterized in that a watertight chamber (2) is used that is mounted so that it pivots on a frame (1) between one position called the recumbent position, in which it is arranged with the chest (4) approximately horizontal and the limbs (5, 6) pointing upwards, and another position called the standing position, in which the chest (4) is approximately vertical and the limbs (5, 6) are pointing downwards.

5 - Procedure according to one of the previous claims, characterized in that the dummy (23) is first dressed in a garment that covers its largest surface.

6 - Procedure according to one of the previous claims, characterized in that a dummy (23) made from a rigid material is used which is jointed at the shoulders, elbows, hips, knees and ankles.

7 - Procedure according to claim 6, characterized in that a hollow dummy (23) is used which:

– is made from a rigid material pierced with numerous air holes distributed across its surface so that the air trapped between the said dummy (23) and the suit can be evacuated,

– is fitted with an air vent pipe at the top of the chest and which emerges into the open air via an opening in the chamber (2) when the said dummy (23) is installed inside the said chamber (2).

8 - Procedure according to one of the previous claims, characterized in that the following operations are performed in order to determine the mass of liquid that has penetrated the suit:

– two capillary pipes (16, 17) are used that are connected to the chamber (2) so that the level of liquid in the said pipes (16, 17) reaches the same level as that in the said chamber (2) when this is filled,

– after filling, the reference filling level for the chamber (2) is maintained in one of the pipes (17), with the other pipe (16) being kept in contact with this chamber (2) so that the level in the said pipe (16) and the said chamber (2) drops by a similar amount,

– the changes in the differential pressure between the two pipes (16, 17) are continuously recorded and the results obtained are compared with the calibration data drawn up for the type of suit being tested.

9 - Device for implementing a procedure conforming to one of the previous claims, characterized in that it comprises:

– a frame (1) supporting a watertight chamber (2) that is in the form of a body comprising a chest (4) and limbs (5, 6) tilted at a predetermined angle in relation to the said chest (4), with the said chamber (2) being fitted with a watertight removable lid (8) for inserting a dummy (23) dressed in a suit,

– filling equipment (13, 14) suitable for filling the chamber (2) with liquid up to a predetermined level, called the reference level,

– draining equipment for the said chamber (2),

– means for measuring (15, 16, 17, 20, 21, 22) the changes in the level of liquid inside the chamber (2) after this has been filled.

10 - Device according to claim 9, characterized in that it comprises equipment (10) that enables the chamber (2) to pivot relative to the frame (1) which is suitable for making the said chamber pivot (2) between two extreme positions:

– a position, called the recumbent position, in which the chest (4) is approximately horizontal and the limbs (5, 6) are pointing upwards,

– a position, called the standing position, in which the chest (4) is approximately vertical and the limbs (5, 6) are pointing downwards.

11 - Device according to either of claims 9 or 10, characterized in that the chamber (2) comprises arms (5) tilted at an angle of between approximately 60 and 80 degrees relative to the chest (4) and legs (6) tilting at an angle of between approximately 30 and 50 degrees relative to the said chest (4).

12 - Device according to one of the claims 9 to 11, characterized in that it comprises sensor equipment (19) for detecting the level of liquid inside the chamber, suitable for shutting down the means for filling the said chamber (2) with liquid when the reference level is reached.

13 - Device according to one of the claims 9 to 12, characterized in that the means for measuring the level of liquid in the chamber (2) comprise:

– two capillary pipes (16, 17) that communicate with the chamber (2) and arranged so that the level of liquid in the said pipes and chamber (2) is the same when the latter is filled up.

– means (15) for blocking off one of the pipes (17) that are suitable for maintaining in the said pipe (17) a level of liquid equal to the reference level,
– means for continuously measuring and recording (20, 21, 22) the differential pressure between the two pipes (16, 17). Caption on y-axis of fig 5 = water

**Patentansprüche**

1/ - Verfahren zum Testen der Durchlässigkeit von dichten Anzügen, wie sie insbesondere im Luftfahrtbereich verwendet werden, dadurch gekennzeichnet, dass es darin besteht:
– einer Testpuppe (23) mit mindestens einem Oberkörper und vier Gliedmassen einen derartigen dichten Anzug anzulegen,
– die Testpuppe (23) in einen dichten Kasten (2) zu legen, der die Form eines Körpers mit einem Oberkörper (4) und Gliedmassen (5, 6) aufweist, die gegenüber dem Oberkörper (4) um einen vorbestimmten Winkel geneigt sind,
– den dichten Kasten (2) bis zum einem bestimmten Füllstand mit Flüssigkeit zu Füllen, bei dem die Testpuppe (23) zumindest teilweise eingetaucht ist, und diesen sogenannten Bezugsfüllstand nach seiner Stabilisierung festzustellen,
– die Testpuppe (23) während einem vorbestimmten Zeitraum im Kasten (2) zu lassen und den neuen Flüssigkeitsstand im Kasten nach Ablauf dieses Zeitraums zu messen, um anhand des Füllstandsunterschieds die Flüssigkeitsmasse zu bestimmen, die in den Anzug eingedrungen ist,
– den Kasten (2) zu entleeren und die Testpuppe (23) herauszunehmen.

2/ - Verfahren gemäss dem Anspruch 1, dadurch gekennzeichnet, dass man den dichten Kasten (2) bis zu einem Füllstand befüllt, bei dem nur noch die Enden der Gliedmassen der Testpuppe (23) aus der Flüssigkeit herausragen, um somit die vom Gewebe des Anzugs absorbierte Flüssigkeitsmasse zu bestimmen.

3/ - Verfahren gemäss dem Anspruch 1, dadurch gekennzeichnet, dass man den dichten Kasten (2) bis zu einem Füllstand befüllt, bei dem die gesamte Testpuppe (23) eingetaucht ist, um sich von der Undurchlässigkeit des gesamten Anzugs zu vergewissern.

4/ - Verfahren gemäss einem der Ansprüche 2 oder 3, dadurch gekennzeichnet, dass man einen dichten Kasten (2) verwendet, der schwenkbar auf einer Tragkonstruktion (1) gelagert ist, zwischen einer sogenannten liegenden Stellung, bei der der Oberkörper (4) merklich waagerecht und die Gliedmassen (5, 6) nach oben ausgerichtet sind, und einer sogenannten stehenden Stellung, bei der der Oberkörper (4) merklich senkrecht und die Gliedmassen (5, 6) nach unten ausgerichtet sind.

5/ - Verfahren gemäss einem der vorangehenden Ansprüche, dadurch gekennzeichnet, dass man die Testpuppe (23) vorher mit einer Kleidung versieht, die den grössten Teil ihrer Oberfläche überdeckt.

6/ - Verfahren gemäss einem der vorangehenden Ansprüche, dadurch gekennzeichnet, dass man eine Testpuppe (23) aus starrem Werkstoff verwendet, die über Schulter-, Ellbogen, Hüft-, Knie- und Fussgelenke verfügt.

7/ - Verfahren gemäss dem Anspruch 6, dadurch gekennzeichnet, dass man eine hohle Testpuppe (23) verwendet:
– die aus einem starren Werkstoff besteht, mit einer Vielzahl von über ihre Oberfläche verteilten Luftdurchlässen, so dass die zwischen der besagten Testpuppe (23) und dem Anzug eingeschlossene Luft abgeführt werden kann,
– die über eine Luftabführleitung verfügt, die am oberen Teil des Oberkörpers angeordnet ist und über eine im Kasten (2) vorgesehene Öffnung nach aussen mündet, wenn sich die besagte Testpuppe (23) im besagten Kasten (2) befindet.

8/ - Verfahren gemäss einem der vorangehenden Ansprüche, dadurch gekennzeichnet, dass man folgende Arbeiten vornimmt, um die in den Anzug eingedrungene Flüssigkeitsmasse zu bestimmen:
– man verwendet zwei Kapillare (16, 17), die so mit dem Kasten (2) in Verbindung stehen, dass sich der Flüssigkeitsstand in den besagten Kapillaren (16, 17) dem Füllstand des besagten Kastens (2) während seiner Befüllung angleicht,
– nach der Füllung verbleibt eines der Kapillare (17) auf dem Bezugsfüllstand des Kastens (2), während das andere Kapillar (16) so mit dem Kasten (2) in Verbindung bleibt, dass der Füllstandsabfall im besagten Kapillar (16) und im Kasten (2) ähnlich ist,
– man zeichnet ununterbrochen die Entwicklung des Differenzdrucks zwischen den beiden Kapillaren (16, 17) auf und vergleicht die gemessenen Ergebnisse mit Eichdaten, die für den getesteten Anzugtyp erstellt wurden.

9/ - Vorrichtung zur Durchführung eines Verfahrens gemäss einem der vorangehenden Ansprüche, dadurch gekennzeichnet, dass sie über folgende Bestandteile verfügt:
– einer Tragkonstruktion (1) für einen dichten Behälter (2) in Form eines Körpers mit einem Oberkörper (4) und Gliedmassen (5, 6), die im Verhältnis zu dem besagten Oberkörper (4) um einen vorbestimmten Winkel geneigt sind, wobei der besagte Behälter (2) mit einem dichten, abnehmbaren Deckel (8) zur Einfügung einer mit einem Anzug bekleideten Testpuppe (23) versehen ist,
– Füllungsmitteln (13, 14), zum Füllen des Kastens (2) mit einer Flüssigkeit bis zu einem vorbestimmten, sogenannten Bezugsfüllstand,

– Entleerungsmitteln des besagten Kastens (2),

– Mitteln zur Messung (15, 16, 17, 20, 21, 22) des Füllstands im Kasten (2) nach seiner Füllung.

10/ - Vorrichtung gemäss dem Anspruch 9, dadurch gekennzeichnet, dass sie über Schwenkmittel (10) des Kastens (2) im Verhältnis zur Tragkonstruktion (1) verfügt, um den besagten Kasten (2) zwischen zwei Endstellungen zu verlagern:

– einer sogenannten liegenden Stellung, in der der Oberkörper (4) merklich waagerecht und die Gliedmassen (5, 6) nach oben ausgerichtet sind,

– einer sogennanten stehenden Stellung, in der der Oberkörper (4) merklich senkrecht und die Gliedmassen (5, 6) nach unten ausgerichtet sind.

11/ - Vorrichtung gemäss einem der Ansprüche 9 oder 10, dadurch gekennzeichnet, dass der Kasten (2) über Arme (5) verfügt, die gegenüber dem Oberkörper um einen Winkel zwischen 60 bis 80 Grad geneigt sind, und über Beine (6), die gegenüber dem besagten Oberkörper um einen Winkel zwischen 30 und 50 Grad geneigt sind.

12/ - Vorrichtung gemäss einem der Ansprüche 9 bis 11, dadurch gekennzeichnet, dass sie über Erfassungsmittel (19) des Flüssigkeitsstandes innerhalb des Kastens verfügt, die dazu geeignet sind, die Füllungsmittel des besagten Kastens (2) mit Flüssigkeit abzuschalten, wenn der Bezugsfüllstand erreicht ist.

13/ - Vorrichtung gemäss einem der Ansprüche 9 bis 12, dadurch gekennzeichnet, dass die Messmittel des Flüssigkeitsstands innerhalb des Kastens (2) folgende Bestandteile umfassen:

– zwei mit dem Kasten (2) verbundene Kapillare (16, 17), die so angeordnet sind, dass der Flüssigkeitsstand in den besagten Kapillaren und im Kasten (2) bei Befüllung des letzteren ähnlich ist,

– Verschlussmittel (15) eines dieser Kapillare (17), dazu geeignet, in dem besagten Kapillar (17) einen dem Bezugsfüllstand entsprechenden Flüssigkeitsstand aufrechtzuerhalten,

– Kontinuierliche Mess- und Aufzeichnungsmittel (20, 21, 22) des Differenzdrucks zwischen den beiden Kapillaren (16, 17).

Fig. 1

Fig. 2

Fig. 3

Fig. 4a

EP 0 368 716 B1

Fig. 4b

16

17

5

4

6

10

EP 0 368 716 B1

Fig. 4c

Fig. 5